# EUROPÄISCHE PATENTSCHRIFT

(11) **EP 2 912 199 B1**
(45) Veröffentlichungstag und Bekanntmachung des Hinweises auf die Patenterteilung: **21.09.2016**
(21) Anmeldenummer: 13786199.3
(22) Anmeldetag: 24.10.2013
(51) Int. Cl.: C21C 5/56, F27D 13/00, C21C 5/52, F27B 3/00, F27B 3/22, F27B 3/20, F27B 3/08

(54) **VERFAHREN UND VORRICHTUNG ZUR ENERGIEZUFUHR IN EIN SCHROTTHAUFWERK IN EINEM ELEKTROLICHTBOGENOFEN**
METHOD AND DEVICE FOR SUPPLYING ENERGY INTO A SCRAP METAL PILE IN AN ELECTRIC ARC FURNACE
PROCÉDÉ ET DISPOSITIF D'APPORT D'ÉNERGIE À UNE MASSE DE FERRAILLE DANS UN FOUR À ARC ÉLECTRIQUE

(30) Priorität: 24.10.2012 DE 102012020788
(43) Veröffentlichungstag der Anmeldung: 02.09.2015
(73) Patentinhaber: Primetals Technologies Austria GmbH, 4031 Linz (AT)
(72) Erfinder: BROTZMANN, Karl, 92224 Amberg (DE)
(74) Vertreter: Metals@Linz
(86) Internationale Anmeldenummer: PCT/EP2013/072268
(87) Internationale Veröffentlichungsnummer: WO 2014/064193

(56) Entgegenhaltungen:
- EP-A2- 0 257 450
- WO-A1-96/41896
- WO-A2-2004/092422
- DE-A1- 10 219 488
- JP-A- H08 157 929

## Beschreibung

### Gebiet der Technik

Die Erfindung betrifft ein Verfahren zur Energiezufuhr in ein Schrotthaufwerk in einem Elektrolichtbogenofen.

### Stand der Technik

Es sind Verfahren bekannt, bei denen einem Schrotthaufwerk in einem Elektrolichtbogenofen nicht nur durch den Elektrolichtbogen Energie zugeführt wird, sondern auch durch Strahlen heißer Gase.

In der deutschen Patentschrift DE19521518 und WO2004/092422 wird ein Verfahren zum Einbringen von fossiler

Energie in ein Schrotthaufwerk beschrieben, bei dem gleichzeitig mit der Zufuhr von Energie mittels Elektrolichtbogen durch Strahlen heißer sauerstoffhaltiger Gase Kanäle in ein Schrotthaufwerk geschmolzen werden, durch die dann die weitere Zufuhr von fossiler Energie verfolgt.

In der Deutschen Offenlegungsschrift DE10317195A1 wird gezeigt, mehrere Strahlen Heißgas auf das Schrotthaufwerk zu blasen, während gleichzeitig Energie mittels Elektrolichtbogen zugeführt wird.

Bei diesen bekannten Verfahren hat es sich jedoch gezeigt, dass Störungen durch unerwünschtes, erhebliches Überhitzen des oberen Ofenraums - also des Bereiches zwischen der Deckelwand des Elektrolichtbogenofens und der der Deckelwand zugewandten Oberfläche des Schrotthaufwerkes - auftreten können. Dieser Bereich eines Elektrolichtbogenofens ist darauf ausgelegt, Temperaturen bis etwa 1700 °C ohne Beschädigung auszuhalten. Bei Überhitzung auf höhere Temperaturen kann es zu temperaturbedingten Schäden kommen.

### Zusammenfassung der Erfindung

### Technische Aufgabe

Es ist die Aufgabe der vorliegenden Anmeldung, ein Verfahren und eine Vorrichtung zurzusätzlich zum Elektrolichtbogen erfolgenden - Energiezufuhr in ein Schrotthaufwerk in einem Elektrolichtbogenofen bereitzustellen, durch welche die Gefahr eines Überhitzens und damit verbundener Beschädigung des oberen Ofenraumes vermindert wird.

### Technische Lösung

Diese Aufgabe wird gelöst durch ein Verfahren zur Energiezufuhr in ein Schrotthaufwerk in einem Elektrolichtbogenofen, dadurch gekennzeichnet, dass
- in einer ersten Phase Energie mittels Strahlen von Heißgas zugeführt wird, und nach Beendigung der ersten Phase
- in einer zweiten Phase Energie mittels Elektrolichtbogen zugeführt wird,
wobei das Heißgas in mindestens sechs Strahlen zugeführt wird,
und jeder der zugeführten Strahlen maximal ein Sechstel der insgesamt zugeführten Menge Heißgas führt.

Weiterhin wird 30 bis 60% der dem Schrotthaufwerk zugeführten Energie mittels Heißgas zugeführt und circa 60-40% mittels Elektrolichtbogen.

Die Temperatur des Heißgases beim ersten Auftreffen auf das Schrotthaufwerk liegt bei über 1500°C. Besonders bevorzugt ist es, daß das Heißgas eine Temperatur von über 2000°C hat. Die Temperatur kann bis zu 3000°C betragen oder sogar darüber liegen. Je heißer das Heißgas ist, desto besser verläuft die Übertragung von Energie aus dem Heißgas auf das Schrotthaufwerk.

Das Heißgas wird in der Regel folgendermaßen hergestellt:
Luft wird durch eine Heizvorrichtung auf eine Temperatur von etwa 1000 bis 1300°C gebracht und unter Druck - beispielsweise 1 atm - gesetzt, um ein Ausblasen eines Gasstrahles durch eine Düse zu ermöglichen. Bevorzugterweise wird die Luft auch mit Sauerstoff angereichert, bis etwa 35% Sauerstoffgehalt. In der Folge wird diese, gegebenenfalls mit Sauerstoff angereicherte, Luft mit dem Begriff Eduktheißluft bezeichnet.

Die Eduktheißluft wird als Gasstrahl durch eine Düse ausgeblasen in den Innenraum des Elektrolichtbogenofens. Nach dem Austritt aus der Düse wird diesem Gasstrahl Brennstoff zugeführt, beispielsweise Kohlestaub, Öl oder Gas wie beispielsweise Erdgas. Gas ist bevorzugt, da es sich leicht handhaben lässt, und besonders gut in den Gasstrahl aus Eduktheißluft angesaugt wird. Erdgas ist besonders bevorzugt, weil es leicht verfügbar ist und weil mit Erdgas Temperaturen bis zu 3000°C leicht erreicht werden können.

Der Brennstoff reagiert exotherm mit Sauerstoff im Gasstrahl der Eduktheißluft, so dass ein Strahl von Heißgas entsteht.

Dieser Strahl von Heißgas trifft auf das Schrotthaufwerk, dringt unter Aufschmelzen eines Kanals in das Schrotthaufwerk ein, und gibt dabei seine Energie an den Schrott ab. Dem Schrotthaufwerk wird auf diese Weise mittels des Strahls von Heißgas Energie zugeführt.

### Vorteilhafte Wirkungen der Erfindung

Strahlen von Heißgas verhalten sich in einem Schrotthaufwerk sehr unterschiedlich, je nachdem wie das Lückenvolumen über das Schrotthaufwerk verteilt ist. Das Lückenvolumen, welches sich zwischen dem im Schrotthaufwerk vorhandenen grobstückigen Schrott und kleinstückigem Schrott befindet, ist abhängig von der örtlichen Verteilung dieser verschieden großen Schrottstücke verteilt. Ein Schrotthaufwerk, das in einem Elektrolichtbogenofen eingeschmolzen wird, besteht anfangs volumenmäßig zu etwa 90% aus Lückenvolumen und zu 10% aus Schrott, wobei das Lückenvolumen im Wesentlichen durch kleinstückigen Schrott gebildet wird. Werden Strahlen von Heißgas in ein Schrotthaufwerk geblasen, so strömen sie aus den durch die Strahlen geschmolzenen Kanälen bevorzugt durch Bereiche, die ein großes Lückenvolumen aufweisen und heizen diese Bereiche besonders intensiv auf. Bei Energiezufuhr mittels Strahlen von Heißgas sind die Auswirkungen einer ungleichmäßigen Verteilung des Lückenvolumens umso größer, je größer diese Energiezufuhr lokal auf wenige Strahlen von Heißgas konzentriert ist.

Das erfindungsgemäße Verfahren bringt in überraschender Weise erhebliche-Vorteile bei der Kombination von fossiler- über das Heißgas zugeführter- Energie und elektrischer Energie beim Schmelzen von Schrott in einem Elektrolichtbogenofen.

Erfindungsgemäß kann ein Schrotthaufwerk mit gegenüber herkömmlichen Verfahren verminderter Gefahr einer Überhitzung des oberen Ofenraums auf Temperaturen über 1700°C betriebssicherer durch Heißgas aufgeheizt werden.

Das wird dadurch erreicht, dass einerseits die Zufuhr von Energie mittels Heißgas erfolgt, ohne dass gleichzeitig elektrische Energie mittels Elektrolichtbogen zugeführt wird. Außerdem wird die durch einen einzelnen Strahl von Heißgas eingebrachte Energiemenge begrenzt, indem die von Heißgas eingebrachte Energie auf zumindest sechs, mengenmäßig - und damit auch bezüglich der von ihnen jeweils transportierten Energiemenge - begrenzte Strahlen aufgeteilt wird. Die einzelnen Strahlen sind dabei so auszurichten, dass sie sich im Schrotthaufwerk nicht gegenseitig kreuzen können - ansonsten würde die Energiemenge doch wieder mehr als erfindungsgemäß gewünscht konzentriert werden.

Aufgrund dieser Maßnahmen werden gegenüber dem Stand der Technik größere Bereiche des Schrotthaufwerkes von Heißgas durchströmt. Damit wird vermieden, dass kleinstückige Anteile des Schrotthaufwerks nur lokal schnell erhitzt und teilweise geschmolzen werden. Das würde nämlich dazu führen, dass sich das Schrotthaufwerk infolge Erweichung in diesen lokal schnell erhitzten Bereichen besonders schnell verdichtet werden würde, weshalb die Strahlen von Heißgas - und beim Aufheizen des Schrotthaufwerkes entstehende weitere heiße Gase - gegebenenfalls dort nicht mehr durch das Schrotthaufwerk strömen können, weil dort der Strömungswiderstand zu groß geworden ist. Entsprechen wird auch vermieden, dass ein Teil der Strahlen von Heißgas - und der beim Aufheizen des Schrotthaufwerkes entstehenden weiteren heißen Gase - innerhalb der von den Strahlen von Heißgas geschmolzenen Kanäle zurückströmt und/oder von den - beispielsweise mit Geschwindigkeiten von 700 bis 900 m/s - aufgeblasenen Strahlen von Heißgas wieder angesaugt wird.

Die erfindungsgemäßen Maßnahmen führen also zu einer Vermeidung der bei herkömmlichen Verfahren auftretenden Probleme eines Anwachsens .des Strömungswiderstandes im Schrotthaufwerk und von Rückströmungen in den durch die Strahlen von Heißgas geschmolzenen Kanälen in den oberen Ofenraum. Dadurch wird vermieden, dass der obere Ofenraum überhitzt und dadurch beschädigt wird.

Nach einer Ausführungsform werden circa 40 bis 60 % der dem Schrotthaufwerk zugeführten Energie mittels Heißgas zugeführt, und circa 60 bis 40% mittels Elektrolichtbogen.

Die Strahlen von Heißgas entstehen durch Reaktion von Brennstoff mit Strahlen von Eduktheißluft. Die Eduktheißluft wird mittels einer oder mehrerer Aufblasvorrichtungen zugeführt. Vorteilhafterweise beträgt der Abstand der Strahlen von Eduktheißluft voneinander bei ihrem Austritt aus dieser Aufblasvorrichtung mindestens das Doppelte ihres Durchmessers beim Austritt. Auf diese Weise wird erreicht, dass die aus den Strahlen von Eduktheißluft entstehenden Strahlen von Heißgas sich nicht wieder zu einem Strahl vereinigen, bevor sie auf das Schrotthaufwerk treffen - und sich auch nicht innerhalb des Schrotthaufwerkes vereinigen.

Nach einer weiteren bevorzugten Ausführungsform beträgt der Abstand der Strahlen von Heißgas voneinander im Schrotthaufwerk mindestens das fünf-fache des Durchmessers der Strahlen von Eduktheißluft beim Austritt aus der Aufblasvorrichtung. Auf diese Weise wird erreicht, dass mehrere Strahlen von Heißgas sich im Schrotthaufwerk nicht wieder zu einem Strahl vereinigen.

Beim konventionellen Elektrolichtbogenofen wird zu Beginn der Wirkung des Elektrolichtbogens das Schrotthaufwerk lokal im Wirkungsbereich des Elektrolichtbogens aufgeschmolzen. Eine Wirkung auf Bereiche des Schrotthaufwerks, die weiter entfernt vom Elektrolichtbogen und nicht in seinem Wirkungsbereich liegen, ist nur begrenzt vorhanden. Das gilt besonders für die sogenannten "cold spots", also die Bereiche an der Ofenwand, in die nach dem Stand der Technik gegebenenfalls zusätzlich Energie durch sogenannte "oxyfuel-Brenner" eingebracht wird. Der Wirkungsgrad dieser Brenner ist jedoch begrenzt. Sie können nur für kurze Zeit betrieben werden, weil sich oberhalb des Brenners schnell ein Kamin bildet, durch den die Verbrennungsgase heiß den Schrott-verlassen. Außerdem wird der Schrott durch diese Brenner stark oxydiert.
Nach einer Ausführungsform des erfindungsgemäßen Verfahrens wird zumindest ein Strahl von Heißgas, bevorzugt mehrere Strahlen, von Heißgas auf Zonen des Schrotthaufwerkes außerhalb des Wirkungsbereiches des Elektrolichtbogens ausgerichtet. Die Ausrichtung von einigen Strahlen von Heißgas auf solche Zonen bringt hier besondere Vorteile, wenn dadurch die voranstehend genannten Brenner zur Erhitzung von "cold spots" ersetzt werden. Durch Strahlen von Heißgas erfolgt vorteilhafter Weise ein großräumiges Erfassen des dortigen Schrotts. Dadurch kann auf derartige Brenner ganz verzichtet werden. Es ist für das Aufheizen von diesen Bereichen vorteilhaft, wenn die entsprechenden Strahlen von Heißgas jeweils maximal ein Zwölftel der insgesamt zugeführten Menge Heißgas führen. Damit wird die von diesen Strahlen pro Zeiteinheit maximal zugeführte Energie gegenüber Anspruch 1 nochmals auf die Hälfte reduziert. Das Ziel dieser Maßnahme ist, dass diese Bereiche möglichst nur effektiv vorgeheizt und nur wenig geschmolzen werden, und die Gefahr einer Beschädigung des Elektrolichtbogenofens in diesen Bereichen durch die mittels des Stahls von Heißgas zugeführte Energie vermindert wird.

Die erfindungsgemäße Kombination der Zufuhr von fossiler Energie - über Heißgas - und elektrischer Energie - über elektrischen Lichtbogen - beim Schmelzen von Schrott in einem Elektrolichtbogenofen bringt nicht nur betriebssicher Energie durch Strahlen von Heißgas in das Schrotthaufwerk, es verändert vielmehr auch vorteilhaft die Bedingungen für das spätere Einbringen von elektrischer Energie durch den Lichtbogen.

Nach den Lehren der vorliegenden Erfindung führen die Strahlen von Heißgas zu einem Vorheizen besonders des kleinstückigen Anteils des Schrotts im gesamten Schrotthaufwerk. Damit verdichtet sich das Schrotthaufwerk - aus beispielsweise einem ersten Schrottkorb - infolge Erweichung schnell und führt dadurch einerseits zu günstigen Bedingungen für ein gegebenenfalls erfolgendes Chargieren eines folgenden Schrottkorbes in den Elektrolichtbogenofen vor Inbetriebnahme des Elektrolichtbogens. Andererseits führt das - nach erfindungsgemäßer Aufheizung eines gegebenenfalls chargierten folgenden Schrottkorbes mittels Strahlen von Heißgas - auch zu günstigen Bedingungen für den anschließenden Einsatz des Lichtbogens. Bekanntlich führen kurzzeitige Unterbrechungen des Elektrolichtbogens beim Schmelzen von Schrott, "flickers" genannt, hauptsächlich während der Anfangsphase des Schmelzprozesses mittels Elektrolichtbogen, zu problematischen Rückwirkungen auf das elektrische Netzwerk. Es hat sich gezeigt, dass durch die erfindungsgemäßen Maßnahmen diese "flickers" stark reduziert werden, was für die Versorgung mit elektrischer Energie große Vorteile bringt.

Ein weiterer Gegenstand der vorliegenden Anmeldung ist eine Vorrichtung zur Durchführung des erfindungsgemäßen Verfahrens.

Eine solche Vorrichtung umfasst einen Elektrolichtbogenofen mit Boden, Seitenwänden, und Deckelwand. Sie umfasst auch eine oder mehrere Aufblasvorrichtungen zur Zufuhr von Strahlen von Eduktheißluft in den Innenraum des Elektrolichtbogens sowie Brennstoffzufuhrvorrichtungen, die geeignet sind, den Strahlen von Eduktheißluft Brennstoff zuzuführen.
Mit den Aufblasvorrichtungen kann Eduktheißluft in Strahlen auf ein sich im Innenraum des Elektrolichtbogenofens befindliches Schrotthaufwerk geblasen werden. Erfindungsgemäß weist die eine oder weisen die mehreren Aufblasvorrichtungen dazu insgesamt zumindest 6 Düsen mit Düsenöffnungen auf.
Wenn mittels der Brennstoffzufuhrvorrichtungen den Strahlen von Eduktheißluft Brennstoff zugeführt wird, bilden sich Strahlen von Heißgas, die auf das Schrotthaufwerk treffen.
Der Innenraum des Elektrolichtbogenofens wird unten durch den Boden begrenzt, seitlich durch die Seitenwände, und oben durch die Deckelwand des Elektrolichtbogenofens. Selbstverständlich sind auch Elektroden vorhanden sowie Vorrichtungen, um Elektroden in den Innenraum zuzuführen.

Vorteilhafterweise sind alle Düsen gleich und damit zur Ausgabe von Strahlen von Eduktheißluft mit der gleichen maximalen Menge von Eduktheißluft geeignet.

Eine Aufblasvorrichtung kann beispielsweise als Düsen mit Düsenöffnungen umfassende Lanze ausgebildet sein, die beispielsweise durch eine Öffnung in der Deckelwand in den Innenraum des Elektrolichtbogenofens einführbar ist.
Eine Aufblasvorrichtung kann auch Düsen mit Düsenöffnungen in einer Seitenwand des Elektrolichtbogenofens umfassen.
Bevorzugt umfasst eine Aufblasvorrichtung auch Düsen mit Düsenöffnungen in der Deckelwand des Elektrolichtbogenofens.

Die Düsen können in Düsenköpfen angeordnet sein. Ein Düsenkopf kann eine oder mehrere Düsen aufweisen.

Ganz besonders bevorzugt ist es, wenn die Düsen in Düsenköpfen angeordnet sind, die in in der Deckelwand des Elektrolichtbogenofens zur Einbringung von Elektroden vorgesehenen Öffnungen anordenbar sind. Auf diese Weise kann das erfindungsgemäße Verfahren mit bestehenden Elektrolichtbogenöfen ohne großen Umbauaufwand zur Adaptierung durchgeführt werden.

Bevorzugterweise beträgt der Abstand zwischen den Düsen mindestens das Doppelte des Durchmessers der Düsenöffnung der Düsen. Bevorzugt haben die Düsenöffnungen aller Düsen den gleichen Durchmesser. Das erleichtert es, durch alle Düsen gleichmäßig Eduktheißgas einzublasen.

Nach einer weiteren Ausführungsform sind mindestens drei getrennte Düsenköpfe vorhanden, in denen jeweils mindestens zwei Düsenöffnungen vorhanden sind.

Es ist bevorzugt, wenn die Düsen voneinander weg geneigt sind. Damit wird sichergestellt, dass mehrere aus Düsen austretende Strahlen von Eduktheißluft, beziehungsweise aus solchen Strahlen entstehende Strahlen von Heißgas, sich nicht zu einem Strahl vereinigen. Bevorzugt ist das der Fall für mehrere Düsen innerhalb eines Düsenkopfes.
Der von den Längsachsen der Düsen eingeschlossene Winkel beträgt besonders bevorzugt 5-10°.

### Kurze Beschreibung der Zeichnungen

Figur 1 zeigt schematisch und beispielhaft eine erfindungsgemäße Vorrichtung, die zur Durchführung eines erfindungsgemäßen Verfahrens geeignet ist, mit Elektrolichtbogenofen in Seitenansicht im Schnitt.
Figur 2 zeigt den Elektrolichtbogenofen aus Figur 1 in Draufsicht von oben.

### Beschreibung von Ausführungsformen

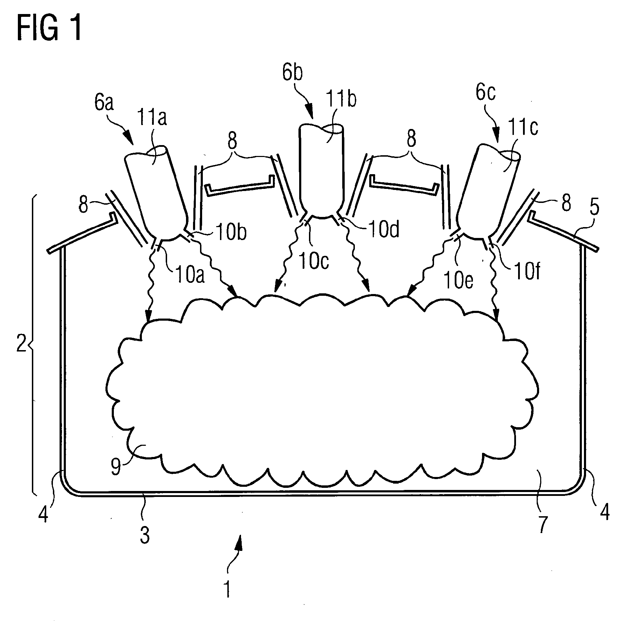

Figur 1 zeigt schematisch und beispielhaft eine erfindungsgemäße Vorrichtung 1, die zur Durchführung eines erfindungsgemäßen Verfahrens geeignet ist, mit Elektrolichtbogenofen 2 in Seitenansicht im Schnitt. Der Elektrolichtbogenofen 2 hat einen Boden 3, Seitenwände 4, und eine Deckelwand 5. Die erfindungsgemäße Vorrichtung 1 umfasst auch mehrere Aufblasvorrichtungen 6a, 6b, 6c zur Zufuhr von Eduktheißluft in den Innenraum 7 des Elektrolichtbogens 2. Mit den Brennstoffzufuhrvorrichtungen 8 wird den aus den Aufblasvorrichtungen 6a, 6b, 6c austretenden Strahlen von Eduktheißluft Brennstoff, in diesem Fall Erdgas, zugeführt. Durch exotherme Reaktion des Brennstoffs, der in die Strahlen von Eduktheißluft eingesaugt wird, entstehen Strahlen von Heißgas - schematisch dargestellt durch gewellte Pfeile. Mittels der Strahlen von Heißgas wird dem sich im Innenraum 7 des Elektrolichtbogenofens 2 befindlichen Schrotthaufwerk 9 Energie zugeführt. Die Aufblasvorrichtungen 6a, 6b, 6c weisen insgesamt sechs Düsen 10a, 10b, 10c, 10d, 10e, 10f mit Düsenöffnungen auf. Dargestellt ist in Figur 1 die Vorrichtung während einer ersten Phase des erfindungsgemäßen Verfahrens, bei der dem Schrotthaufwerk 9 Energie mittels Strahlen von Heißgas zugeführt wird. Das Heißgas wird in sechs Strahlen zugeführt, wobei jeder der zugeführten Strahlen ein Sechstel der insgesamt zugeführten Menge Heißgas führt. Die Düsen 10a, 10b, 10c, 10d, 10e, 10f sind in drei Düsenköpfen 11 a, 11 b, 11 c angeordnet, die in in der Deckelwand 5 des Elektrolichtbogenofens 2 zur Einbringung von Elektroden vorgesehenen Öffnungen angeordnet sind. Jeder Düsenkopf 11 a, 11 b, 11 c weist zwei Düsen und damit zwei Düsenöffnungen auf. Die Düsenöffnungen aller Düsen 10a, 10b, 10c, 10d, 10e, 10f haben den gleichen Durchmesser. Der Abstand zwischen den Düsen 10a, 10b, 10c, 10d, 10e, 10f beträgt mindestens das Doppelte des Durchmessers der Düsenöffnung der Düsen 10a, 10b, 10c, 10d, 10e, 10f. Dadurch beträgt der Abstand der Strahlen von Eduktheißluft voneinander bei ihrem Austritt aus den Aufblasvorrichtungen 6a, 6b, 6c mindestens das Doppelte ihres Durchmessers beim Austritt. In der dargestellen Konfiguration beträgt der Abstand der Strahlen von Heißgas voneinander im Schrotthaufwerk mindestens das fünf-fache des Durchmessers der Strahlen von Eduktheißluft beim Austritt aus den Aufblasvorrichtungen 6a, 6b, 6c.

Zur besseren Übersichtlichkeit wurde auf die Darstellung von Elektroden und/oder von Vorrichtungen, um Elektroden in den Innenraum zuzuführen, verzichtet. Ebenso wurde auf die Darstellung der zweiten Phase des erfindungsgemäßen Verfahrens, bei der Energie mittels Elektrolichtbogen zugeführt wird, verzichtet.

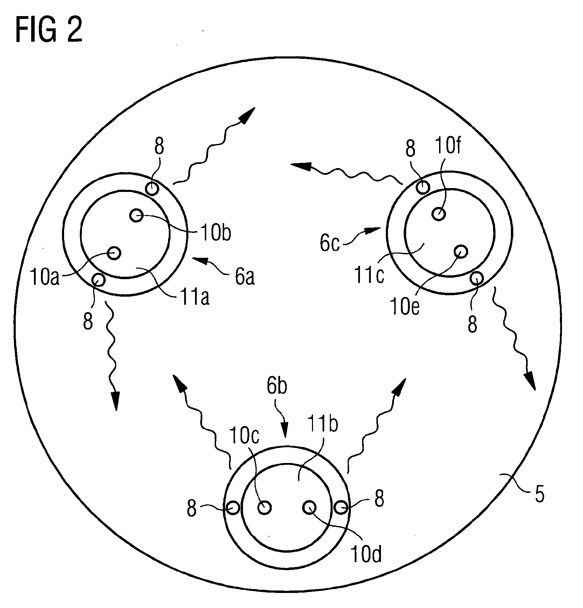

Figur 2 zeigt den Elektrolichtbogenofen aus Figur 1 in Draufsicht von oben auf die Deckelwand 5. Die Bezugszeichen sind gleich wie in Figur 1 verwendet. Dargestellt sind auch die sechs Strahlen von Heißgas als gewellte Pfeile.

Die vorliegende Erfindung wird beispielhaft anhand des folgenden Ausführungsbeispiels erläutert:
In einem 80-t-Elektrolichtbogenofen wird Schrott in zwei Körben chargiert. Nach dem ersten Korb wird Eduktheißluft (18.000 Nm3/h) - angereichert auf einen Sauerstoffgehalt von 35% - mit einer Temperatur von 1.200°C durch sechs Düsen mit von 3.000 Nm3 pro Stunde und Düse geblasen. Den Strahlen von Eduktheißluft wird Erdgas zugeführt- den 18.000 Nm3/h eine Menge von 3.200 Nm3/h. Durch Verbrennung des Erdgases in den Strahlen von Eduktheißluft entstehen Strahlen von Heißgas. Die Düsen sind so ausgerichtet, dass sich die Strahlen von Heißgas im Schrotthaufwerk nicht vereinen können und dass sie das Schrotthaufwerk ungefähr gleichverteilt durchströmen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: erfindungsgemäße Vorrichtung
- 2: Elektrolichtbogenofen
- 3: Boden
- 4: Seitenwand
- 5: Deckelwand
- 6a, 6b, 6c: Aufblasvorrichtungen
- 7: Innenraum
- 8: Brennstoffzufuhrvorrichtungen
- 9: Schrotthaufwerk
- 10a, 10b, 10c, 10d, 10e, 10f: Düse
- 11a, 11b, 11c: Düsenkopf

### Liste der Anführungen

### Patentliteratur

DE19521518
DE10317195

## Patentansprüche

1. Verfahren zur Energiezufuhr in ein Schrotthaufwerk (9) in einem Elektrolichtbogenofen (2), **dadurch gekennzeichnet, dass**
- in einer ersten Phase Energie mittels Strahlen von Heißgas zugeführt wird, und nach Beendigung der ersten Phase
- in einer zweiten Phase Energie mittels Elektrolichtbogen zugeführt wird,
wobei das Heißgas in mindestens sechs Strahlen zugeführt wird,
und jeder der zugeführten Strahlen maximal ein Sechstel der insgesamt zugeführten Menge Heißgas führt,
wobei circa 40 bis 60 % der dem Schrotthaufwerk zugeführten Energie mittels Heißgas zugeführt werden, und circa 60 bis 40% mittels Elektrolichtbogen.

2. Verfahren nach Anspruch 1, wobei die Strahlen von Heißgas durch Reaktion von Brennstoff mit Strahlen von Eduktheißluft entstehen, welche aus zumindest einer Aufblasvorrichtung (6a,6b,6c) zugeführt werden, **dadurch gekennzeichnet, dass** der Abstand der Strahlen von Eduktheißluft voneinander bei ihrem Austritt aus dieser Aufblasvorrichtung (6a,6b,6c) mindestens das Doppelte ihres Durchmessers beim Austritt beträgt.

3. Verfahren nach Anspruch 1, wobei die Strahlen von Heißgas durch Reaktion von Brennstoff mit Strahlen von Eduktheißluft entstehen, welche aus zumindest einer Aufblasvorrichtung (6a,6b,6c) zugeführt werden, **dadurch gekennzeichnet, dass** der Abstand der Strahlen von Heißgas voneinander im Schrotthaufwerk (9) mindestens das fünf-fache des Durchmessers der Strahlen von Eduktheißluft beim Austritt aus der Aufblasvorrichtung (6a,6b,6c) beträgt.

4. Verfahren nach einem der Ansprüche 1 bis 3, **dadurch gekennzeichnet, dass** zumindest ein Strahl von Heißgas, bevorzugt mehrere Strahlen von Heißgas, auf Zonen des Schrotthaufwerkes (9) außerhalb des Wirkungsbereiches des Elektrolichtbogens ausgerichtet wird.

5. Verfahren nach Anspruch 4, **dadurch gekennzeichnet, dass** die auf Zonen des Schrotthaufwerkes (9) außerhalb des Wirkungsbereiches des Elektrolichtbogens ausgerichteten Strahlen von Heißgas jeweils maximal ein Zwölftel der insgesamt zugeführten Menge Heißgas führen.

6. Vorrichtung (1) zur Durchführung eines Verfahrens nach einem der Ansprüche 1 bis 5, mit einem Elektrolichtbogenofen (2) mit Boden (3), Seitenwänden (4), und Deckelwand (5), **dadurch gekennzeichnet, dass**
sie auch umfasst
- eine oder mehrere Aufblasvorrichtungen (6a,6b,6c) zur Zufuhr von Strahlen von Eduktheißluft in den Innenraum (7) des Elektrolichtbogenofens (8), welche insgesamt zumindest sechs Düsen (10a,10b,10c,10d,10e,10f) mit Düsenöffnungen aufweisen,
- Brennstoffzufuhrvorrichtungen (8) zur Zufuhr von Brennstoff zu den Strahlen von Eduktheißluft,
wobei der Abstand zwischen den Düsen (10a, 10b, 10c, 10d, 10e, 10f) mindestens das Doppelte des Durchmessers der Düsenöffnung der Düsen (10a, 10b, 10c, 10d, 10e, 10f) beträgt.

7. Vorrichtung gemäß Anspruch 6, **dadurch gekennzeichnet, dass** alle Düsen (10a, 10b, 10c, 10d, 10e, 10f) gleich sind.

8. Vorrichtung nach einem der Ansprüche 6 oder 7, **dadurch gekennzeichnet, dass** die Aufblasvorrichtungen (6a, 6b, 6c) auch Düsen (10a, 10b, 10c, 10d, 10e, 10f) mit Düsenöffnungen in der Deckelwand des Elektrolichtbogenofiens umfassen.

9. Vorrichtung nach einem der Ansprüche 6 bis 8, **dadurch gekennzeichnet, dass** die Düsen (10a, 10b, 10c, 10d, 10e, 10f) in Düsenköpfen (11a, 11b, 11c)) angeordnet sind, die in in der Deckelwand (5) des Elektrolichtbogenofens (2) zur Einbringung von Elektroden vorgesehenen Öffnungen anordenbar sind.

10. Vorrichtung nach einem der Ansprüche 6 bis 9, **dadurch gekennzeichnet, dass** die Düsenöffnungen aller Düsen (10a, 10b, 10c, 10d, 10e, 10f) den gleichen Durchmesser heben,

11. Vorrichtung nach einem der Ansprüche 6 bis 10, **dadurch gekennzeichnet, dass** mindestens drei getrennte Düsenköpfe (11a, 1b, 11c) vorhanden sind, in denen jeweils mindestens zwei Düsenöffnungen vorhanden sind.

## Claims

1. Method for supplying energy into a scrap metal pile (9) in an electric arc furnace (2), **characterised in that**
- in a first phase, energy is supplied by means of jets of hot gas and after completing the first phase
- in a second phase, energy is supplied by means of electric arcs,
wherein the hot gas is supplied in at least six jets, and each of the supplied jets conveys a maximum of a sixth of the overall quantity of hot gas supplied,
wherein approx. 40 to 60% of the energy supplied to the scrap metal pile is supplied by means of hot gas, and approx. 60 to 40% by means of electric arcs.

2. Method according to claim 1, wherein the jets of hot gas are produced by a reaction of fuel with the jets of reactant hot air, which are supplied from at least one blowing apparatus (6a, 6b, 6c), **characterised in that** the distance between the jets of reactant hot air upon exiting this blowing apparatus (6a, 6b, 6b) amounts to at least twice their diameter upon exiting.

3. Method according to claim 1, wherein the jets of hot gas are produced by a reaction of fuel with the jets of reactant hot air, which are supplied from at least one blowing apparatus (6a, 6b, 6c), **characterised in that** the distance between the jets of hot gas in the scrap metal pile (9) amounts to at least five times the diameter of the jets of reactant hot air upon exiting the blowing apparatus (6a, 6b, 6c).

4. Method according to one of claims 1 to 3, **characterised in that** at least one jet of hot gas, preferably a number of jets of hot gas, is aligned toward zones of the scrap metal pile (9) outside of the operating area of the electric arc.

5. Method according to claim 4, **characterised in that** the jets of hot gas aligned toward zones of the scrap metal pile (9) outside of the operating area of the electric arc each convey a maximum of a twelfth of the overall quantity of hot gas supplied.

6. Apparatus (1) for performing a method according to one of claims 1 to 5, with an electric arc furnace (2) having a base (3), side walls (4) and cover wall (5), **characterised in that** it also includes
- one or more blowing apparatuses (6a, 6b, 6c) for supplying jets of reactant hot air into the interior (7) of the electric arc furnace (8), which overall have at least six nozzles (10a, 10b, 10c, 10d, 10e, 10f) with nozzle openings,
- fuel supply apparatuses (8) for supplying fuel to the jets of reactant hot air,
wherein the distance between the nozzles (10a, 10b, 10c, 10d, 10e, 10f) amounts to at least twice the diameter of the nozzle opening of the nozzles (10a, 10b, 10c, 10d, 10e, 10f).

7. Apparatus according to claim 6, **characterised in that** all nozzles (10a, 10b, 10c, 10d, 10e, 10f) are the same.

8. Apparatus according to one of claims 6 or 7, **characterised in that** the blowing apparatuses (6a, 6b, 6c) also include nozzles (10a, 10b, 10c, 10d, 10e, 10f) with nozzle openings in the cover wall of the electric arc furnace.

9. Apparatus according to one of claims 6 to 8, **characterised in that** the nozzles (10a, 10b, 10c, 10d, 10e, 10f) are arranged in nozzle heads (11a, 11b, 11c), which can be arranged in openings in the cover wall (5) of the electric arc furnace (2) provided for the introduction of electrodes.

10. Apparatus according to one of claims 6 to 9, **characterised in that** the nozzle openings of all nozzles (10a, 10b, 10c, 10d, 10e, 10f) have the same diameter.

11. Apparatus according to one of claims 6 to 10, **characterised in that** at least three separate nozzle heads (11a, 11b, 11c) are present, in which at least two nozzle openings are present in each instance.

## Revendications

1. Procédé d'apport d'énergie dans une masse de ferrailles (9) dans un four électrique à arc (2), **caractérisé en ce que**
- dans une première phase, de l'énergie est apportée au moyen de jets de gaz chaud, et, après achèvement de la première phase,
- dans une deuxième phase, de l'énergie est apportée au moyen d'arcs électriques,
dans lequel le gaz chaud est alimenté sous la forme d'au moins six jets,
et chacun des jets apporte au plus un sixième de la quantité totale apportée de gaz chaud,
dans lequel environ 40 à 60 % de l'énergie apportée à la masse de ferrailles sont apportés au moyen de gaz chaud, et environ 60 à 40 % sont apportés au moyen des arcs électriques.

2. Procédé selon la revendication 1, dans lequel les jets de gaz chaud sont issus d'une réaction de combustible avec des jets d'air chaud de départ, qui sont alimentés à partir d'au moins un dispositif de soufflage (6a, 6b, 6c), **caractérisé en ce que** l'écart entre les jets d'air chaud de départ à leur sortie dudit dispositif de soufflage (6a, 6b, 6c) représente au moins le double de leur diamètre à la sortie.

3. Procédé selon la revendication 1, dans lequel les jets de gaz chaud sont issus d'une réaction de combustible avec des jets d'air chaud de départ, qui sont alimentés à partir d'au moins un dispositif de soufflage (6a, 6b, 6c), **caractérisé en ce que** l'écart entre les jets de gaz chaud dans la masse de ferrailles (9) représente au moins cinq fois le diamètre du jet d'air chaud de départ à la sortie du dispositif de soufflage (6a, 6b, 6c).

4. Procédé selon l'une quelconque des revendications 1 à 3, **caractérisé en ce qu'**au moins un jet de gaz chaud, de manière préférée plusieurs jets de gaz chaud, sont orientés vers des zones de la masse de ferrailles (9) situées à l'extérieur du secteur d'action de l'arc électrique.

5. Procédé selon la revendication 4, **caractérisé en ce que** les jets de gaz chaud orientés vers des zones de la masse de ferrailles (9) situées à l'extérieur du secteur d'action de l'arc électrique apportent respectivement au plus un douzième de la quantité de gaz chaud totale apportée.

6. Dispositif (1) destiné à mettre en oeuvre un procédé selon l'une quelconque des revendications 1 à 5, avec un four électrique à arc (2) avec un fond (3), des parois latérales (4), et une paroi formant couvercle (5), **caractérisé en ce qu'**il comprend également
- un ou plusieurs dispositif(s) de soufflage (6a, 6b, 6c) destiné(s) à alimenter des jets d'air chaud de départ dans l'espace intérieur (7) du four électrique à arc (8), lesdits dispositifs présentant au total au moins six buses (10a, 10b, 10c, 10d, 10e, 10f) avec des ouvertures de buse
- des dispositifs d'apport de combustible (8) destinés à apporter du combustible aux jets d'air chaud de départ,
dans lequel l'écart entre les buses (10a, 10b, 10c, 10d, 10e, 10f) représente au moins le double du diamètre de l'ouverture de buse des buses (10a, 10b, 10c, 10d, 10e, 10f).

7. Dispositif selon la revendication 6, **caractérisé en ce que** toutes les buses (10a, 10b, 10c, 10d, 10e, 10f) sont identiques.

8. Dispositif selon la revendication 6 ou 7, **caractérisé en ce que** les dispositifs de soufflage (6a, 6b, 6c) comprennent également des buses (10a, 10b, 10c, 10d, 10e, 10f) avec des ouvertures de buse dans la paroi formant couvercle du four électrique à arc.

9. Dispositif selon l'une quelconque des revendications 6 à 8, **caractérisé en ce que** les buses (10a, 10b, 10e, 10d, 10e, 10f) sont agencées dans des têtes de buse (11a, 11b, 11c) qui peuvent être agencées dans des ouvertures prévues dans la paroi formant couvercle (5) du four électrique à arc (2) en vue d'une introduction d'électrodes.

10. Dispositif selon l'une quelconque des revendications 6 à 9, **caractérisé en ce que** les ouvertures de buse de toutes les buses (10a, 10b, 10c, 10d, 10e, 10f) présentent le même diamètre.

11. Dispositif selon l'une quelconque des revendications 6 à 10, **caractérisé en ce qu'**il comprend au moins trois têtes de buse (11a, 11b, 11c) séparées, dans lesquelles sont présentes respectivement au moins deux ouvertures de buse.
